# EUROPEAN PATENT APPLICATION

(11) **EP 2 557 807 A1**
(43) Date of publication of application: **13.02.2013**
(21) Application number: 11177214.1
(22) Date of filing: 11.08.2011
(51) Int. Cl.: H04N 21/61, H04N 21/462, H04N 21/4722, H04N 21/466

(54) **Method to enhance broadcast content for a user**

(71) Applicant: Nagravision S.A., 1033 Cheseaux-sur-Lausanne (CH)
(72) Inventor: Kudelski, André, 1095 Lutry (CH); Nicolas, Christophe, 1162 Saint-Prex (CH)
(74) Representative: Leman Consulting S.A.

(57) **Abstract**

The present invention proposes a method to enhance broadcast content of an event received by a television set by supplying additional information related to the event. A user builds a request message for getting more information through a displayed menu where some items are extracted from metadata broadcast with the content. The request message, completed with user preference and identification data, is sent to a management center. The latter performs a search in local databases or in remote databases of providers distributed in a cloud comprising a plurality of internet services and resources. The search results are filtered before sending to the television set in form of enhanced data comprising abstracts including at least text, or any combination of text with graphics or pictures.

## Description

### Field of the invention

The present invention concerns the field of providing enhanced information data to a user in relation with contents currently viewed on a television set.

### Technical background, problem to be solved

In a hybrid television and Internet environment, combining content coming from a broadcast source, as well as content coming from an internet based connection, in one or multiple devices or networks, the increasing number of channels and/or data makes the management and access to those difficult without having specific metadata describing the content. Metadata which may be a service information table DVB-SI or a proprietary data stream help in the content indexation and access through search mechanisms or other methods. Information such as content title and description, channel names, but also close caption (subtitle) data or Teletext may then be used to search in Internet or the cloud to obtain supplementary data related to content of the broadcast data.

In our specific case, the problem is even worse as those metadata need to be generated for both sources of content, and combined to do an efficient search.

Searching content may be done on live content, scheduled content, as well as locally stored content.

On top of that, the search in the metadata may be very inefficient if the receiver or set top box does not have the context awareness, i.e. not knowing which channel (especially broadcast channel) the user is currently watching.

Today the problem is solved by generating metadata at the internet source for distributing through the internet delivery network, in order to describe the entire content and allowing search. A drawback of this method is that the receivers become slow and inefficient until the complete metadata have been retrieved from the internet.

Another method is to send a query to the server side or cloud side, and run the query in the server, and to send back the obtained result(s).

In some specific cases of the broadcast and internet content being acquired by two or multiple separate devices, the entire metadata needs to be sent to the internet connected device, without awareness of the context or content type that the end user is entitled to from the broadcast content.

When content are stored locally, metadata describing the content may be created locally, or retrieved from the internet connection.

### Summary of the invention, solution,

The classical search method consists of using information entered by the user to perform a search in the cloud or locally when local information is seek.

The principle of the innovation is to add to the request of the user a combination of locally stored information and/or information received directly or indirectly from the broadcast signal(s) for the query to be carried out through the Internet or cloud.

The cloud should be understood as a plurality of Internet resources or services.

An aim of the present invention is to solve the above mentioned problems by a method to enhance broadcast content by supplying additional information about a broadcast event, comprising steps of:
- receiving by a television receiver device a broadcast event from a broadcast source,
- extracting metadata related to the received broadcast event, said metadata comprising descriptive information about the broadcast event,
- receiving a command from a user to enhance the broadcast event,
- displaying a menu in which at least part of available fields are filled with data extracted from the metadata,
- receiving a command to send a request,
- preparing a request message comprising the data extracted from the metadata, additional user selected data and user local data,
- sending the request message to a management center,
- receiving enhanced data related to the broadcast event,
- displaying the enhanced data.

Alternatively local information (and/or the information obtained from the broadcasted signal) can be used to post process the result from the cloud computing.

Once the user desires to receive more information about a currently broadcast event, he can simply activate the search function and a corresponding menu window opens.

The processing system of the receiving device (set-top-box or television set) extracts the metadata of the current broadcast for pre-filling the request. A request message is prepared with a menu proposed to the user showing a few fields for search purpose. Some of the fields are already filled with the metadata of the current event and some other fields are completed by the user. Additional fields are available for selection by the user who introduces a topic chosen in a list.

Once the fields are completed, the user sends the request message to a management center. This request message contains additional information such as the user's identification (at least an address for sending back the response), the identification of the channel from which the user has initiated the request or default data (e.g. preferred language).

This request message is then sent via an Internet connection from the television receiver device to a management center at a predefined address. The management center is in charge of receiving and processing request messages received from the users for obtaining additional information about the event of interest according to the selection made by the user. The management center accesses various databases to retrieve the expected results and sends them back to the concerned users in response to their requests.

### Brief description of the figure

The invention will be better understood with the following detailed description of a preferred embodiment, which refers to the attached figure given as non-limitative example.

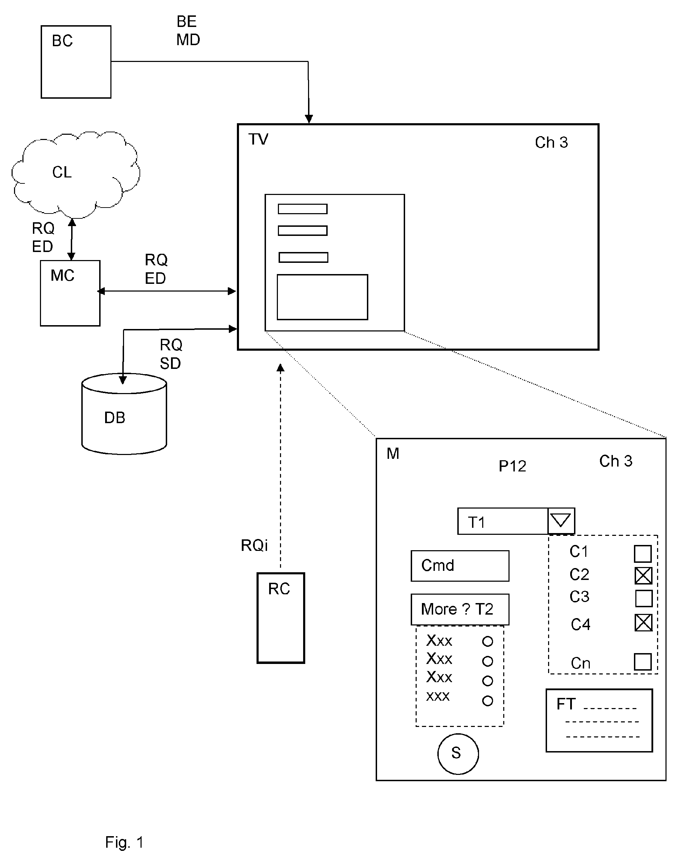

Figure 1 shows a television set connected to data sources providing events and additional information requested by the user with a remote control and displayed menu fields.

### Detailed description, preferred embodiment

During an initialization phase, the user first introduces preferences data SD into a local database DB connected to a television receiver device TV such as a set top box connected to a television set or the television set TV itself including all the features of a set top box. These preferences data SD comprise the preferred language, the preferred area of interest or any data related to the user (such as its country of residence, its current location, history of previous searches, watching preferences etc.

A further step is enjoying a television experience by watching a broadcast event BE named P12 on a channel Ch3 coming from a broadcast source BC. It is known that together with the audio/video data, the channel Ch3 comprises information data named metadata MD comprising among others a short description of the event P12 currently broadcast.

The user press a particular button "Get more info" or "Info" or similar designation on a remote controller RC which sends a get information command RQi to the television receiver device TV which displays on the screen a window including a menu M. This menu M may comprise at least one or more fields which are already filled in order to avoid cumbersome typing on the remote control RC. The information thus displayed is provided by extraction from the metadata MD received from broadcast data BE.

The menu fields may be of at least one or a combination of following types:
- fields with pre-filled entries extracted from the metadata such as a topic T1 with preselected choices in check boxes C1,..., Cn already activated. The choices may be modified by the user by checking / un-checking the appropriate entry.
- fields T2 with items Xxx to check according to user desires.
- fields for inserting free text FT such as key-words to be typed by the user

In addition to these fields T1, T2, FT, the menu M may contain places or fields to enter commands Cmd allowing selecting an event or time scheduling an event (current event, past event of future event).

Beside the fields already filled, the window menu M can propose some selections using keywords related to the type of event, for example for a movie keywords such as "The cast", "Scenario", "Scenery"... will help to better understand the user's need. Finally some free fields are available for the user to more specify the request.

A command (S) "Send", activated by a button S on the menu allows the television receiver device TV preparing a request RQ message formed in accordance with the user selections made on the menu M. The request RQ message is completed with pre-stored data SD taken from a local database DB. These data recorded during the television receiver device TV initialization phase comprise user preferences, user identification and/or at least identification of the television receiver device TV.

The request RQ message is then submitted to the management center MC via a bidirectional communication channel linking the television receiver device TV to said management center MC. The latter performs a search on the basis of the request RQ message in local databases or in various remote databases of providers distributed in the cloud CL.

The search results are further processed by using filters which outputs the most useful information including enhanced data ED related to the broadcast event BE and corresponding to the user's request.

The managing center MC sends the enhanced data ED back to the user's television receiver device TV in form of a plurality of abstracts describing persons, facts, objects, context, etc. of the broadcast content BE. These abstracts include at least text, or any combination of text with graphics and/or pictures. Each abstract or a part of it may be selected by the user to get more information or details about a particular subject. The abstract itself may thus be completed, upon a further request, with additional data sent by the managing center in a similar way as after the initial request RQ message.

## Claims

1. A method to enhance broadcast content by supplying additional information about a broadcast event (BE), comprising steps of:
- receiving by a television receiver device (TV) a broadcast event (BE) from a broadcast source (BC),
- extracting metadata (MD) related to the received), said metadata (MD) comprising descriptive information about the broadcast event (BE,
- receiving a command (RQi) from a user to enhance the broadcast event (BE),
- displaying a menu (M) in which at least part of available fields are filled with data extracted from the metadata (MD),
- receiving a command (S) to send a request (RQ),
- preparing a request (RQ) message comprising the data extracted from the metadata (MD), additional user selected data and user local data (SD),
- sending the request (RQ) message to a management center (MC),
- receiving enhanced data (ED) related to the broadcast event (BE),
- displaying the enhanced data (ED).

2. The method according to claim 1 **characterized in that** the management center (MC) performs a search on the basis of the request (RQ) message in local databases or in remote databases of providers distributed in a cloud (CL) comprising a plurality of internet services and resources, the search results being filtered before sending in form of enhanced data (ED) to the television receiver device (TV).

3. The method according to claim 1 or 2 **characterized in that** the enhanced data (ED) are received in form of a plurality of abstracts including at least text, or any combination of text with graphics or pictures.

4. The method according to anyone one of claim 1 to 3 **characterized in that** the user local data (SD) is recorded in a local database (DB) connected to the television receiver device (TV) and comprise user preferences, user identification or at least identification of the television receiver device (TV).

5. The method according to anyone one of claim 1 to 4 **characterized in that** the command (S) to enhance the broadcast event (BE) is sent to the television receiver device (TV) via a remote control (RC).

6. The method according to anyone one of claim 1 to 5 **characterized in that** the menu (M) comprises at least one or a combination of fields (T1) with pre-filled entries (C1,..., Cn) extracted from the metadata (MD), fields (T2) with items to check according to user desires and fields (FT) for free text insertion.

7. The method according to claim 6 **characterized in that** the menu further contain fields to enter commands (Cmd) allowing selecting an event or time scheduling an event.
